# EUROPÄISCHE PATENTSCHRIFT

(11) **EP 0 654 490 B1**
(45) Veröffentlichungstag und Bekanntmachung des Hinweises auf die Patenterteilung: **09.07.1997**
(21) Anmeldenummer: 94117518.4
(22) Anmeldetag: 07.11.1994
(51) Int. Cl.: C08G 18/80, C09D 175/04

(54) **Blockierte Polyisocyanate**
Blocked polyisocyanates
Polyisocyanates bloqués

(30) Priorität: 18.11.1993 DE 4339367
(43) Veröffentlichungstag der Anmeldung: 24.05.1995
(73) Patentinhaber: BAYER AG, 51368 Leverkusen (DE)
(72) Erfinder: König, Eberhard, Dr., D-51375 Leverkusen (DE); Engbert, Theodor, Dr., D-50968 Köln (DE); Klimmasch, Thomas, D-51375 Leverkusen (DE); Bock, Manfred, Dr., D-51375 Leverkusen (DE)

(56) Entgegenhaltungen:
- EP-A- 0 004 571
- EP-A- 0 050 284
- EP-A- 0 408 997

## Beschreibung

Die Erfindung betrifft neue blockierte Polyisocyanate, die die Herstellung von, bei vergleichsweise niedrigen Temperaturen von 130 bis 160°C einbrennbaren, Einkomponenten-Polyurethanlacken mit geringem Thermogilb gestatten, ein Verfahren zu ihrer Herstellung und ihre Verwendung.

Mehrschichtlackierungen, die als Decklack einen glänzenden Klarlack auf Basis von blockierten Polyisocyanaten und organischen Polyhydroxylverbindungen, beispielsweise Polyhydroxypolyacrylaten aufweisen, gewinnen wegen ihrer ausgezeichneten lacktechnischen Eigenschaften, insbesondere bei der Automobillackierung, immer größere Bedeutung.

Butanonoxim ist dabei ein übliches, im Markt eingeführtes Blockierungsmittel für Polyisocyanate. Es verfügt über Vorteile, wie z.B. einen günstigen Preis, eine relativ niedrige Abspalttemperatur von ca. 150°C (ohne Katalyse), es reagiert gut mit Polyisocyanaten und führt dabei zu nicht-kristallinen Produkten.

Ein Blockierungsmittel, das bisher nicht die technische Bedeutung von Butanonoxim erlangt hat, ist 1,2,4-Triazol, dessen Anwendung in der DE-OS 28 12 252 beschrieben wird. Wegen der Kristallisationsneigung von 1,2,4-Triazol-blockierten Polyisocyanaten liegt jedoch die bevorzugte Anwendung derartiger Isocyanat-Vernetzer auf dem Pulverlack-Gebiet.

Einkomponenten-Polyurethan-Einbrennlacke, deren Vernetzerkomponente im wesentlichen aus Butanonoxim-blockierten Polyisocyanaten besteht, weisen jedoch eine ausgesprochene Tendenz zur Vergilbung bei hohen Einbrenntemperaturen bzw. bei langer Dauer des Einbrennvorgangs auf.

Der Erfindung lag demzufolge die Aufgabe zugrunde, neue blockierte Polyisocyante zur Verfügung zu stellen, die eine weit geringere Tendenz zur Thermovergilbung bei ansonsten mindestens gleich guten lacktechnischen Eigenschaften aufweisen wie die analogen blockierten Polyisocyanate, die als Blockierungsmittel ausschließlich Butanonoxim aufweisen.

Diese Aufgabe konnte mit den nachstehend näher beschriebenen erfindungsgemäßen misch-blockierten Polyisocyanaten gelöst werden. Die erfindungsgemäßen blockierten Polyisocyanate sind mit Butanonoxim und 1,2,4-Triazol, sowie gegebenenfalls weiteren, an sich bekannten Blockierungsmitteln blockiert. Bereits durch diese Mischblockierung wird ein deutlicher Fortschritt im Sinne der erfindungsgemäßen Aufgabenstellung erzielt. Eine weitere Verbesserung ist durch gleichzeitigen Einbau von bestimmten Hydrazinaddukten der nachstehend näher beschriebenen Art möglich.

Gegenstand der Erfindung sind demzufolge (cyclo)aliphatische Polyisocyanate, deren Isocyanatgruppen zu mindestens 95 % in mit Blockierungsmitteln blockierter Form vorliegen, und die einen Gehalt an unblockierten und blockierten Isocyanatgruppen (berechnet als NCO) von insgesamt 5 bis 25 Gew.-% aufweisen, dadurch gekennzeichnet, daß sich die Blockierungsmittel zu
A) 30 bis 70 Äquivalent-% aus Butanonoxim,
B) 30 bis 70 Äquivalent-% aus 1,2,4-Triazol und zu
C) 0 bis 30 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

Gegenstand der Erfindung ist auch ein Verfahren zur Herstellung dieser Polyisocyanate, gegebenenfalls in in Lacklösungsmitteln gelöster Form durch Umsetzung einer, gegebenenfalls in Lacklösungsmitteln gelösten Polyisocyanat-Komponente, bestehend aus mindestens einem Polyisocyanat mit (cyclo)aliphatisch gebundenen Isocyanatgruppen und einem Isocyanatgehalt von 7 bis 30 Gew.-% mit Blockierungsmitteln für Isocyanatgruppen, wobei gegebenenfalls vor, während und/oder im Anschluß an die Blockierungsreaktion bis zu 20 NCO-Äquivalent-% des zu blockierenden Polyisocyanats mit Verbindungen mit mindestens einer Carbonsäurehydrazid-Gruppe und mindestens einer gegenüber Isocyanatgruppen reaktionsfähigen Gruppe im Sinne einer Isocyanat-Additionsreaktion zur Reaktion gebracht werden, so daß das resultierende, blockierte Polyisocyanat bis zu 4 Gew.-%, bezogen auf Feststoff, an chemisch fixierten Struktureinheiten der Formel 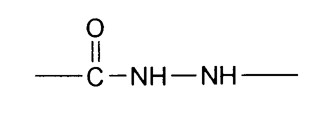 enthält,
dadurch gekennzeichnet, daß die Blockierungsmittel in einer Menge von mindestens 95 Äquivalent-%, bezogen auf die, nach der genannten, gegebenenfalls durchzuführenden Modifizierung noch vorliegenden NCO-Gruppen des zu blockierenden Polyisocyanats zum Einsatz gelangen und sich, bezogen auf die Gesamtmenge der Blockierungsmittel, zu
A) 30 bis 70 Äquivalent-% aus Butanonoxim,
B) 30 bis 70 Äquivalent-% 1,2,4-Triazol und
C) 0 bis 30 Äquivalent-% aus mindestens einem weiteren, von A) und B) verschiedenen Blockierungsmittel zusammensetzen, wobei die Blockierungsmittel in beliebiger Reihenfolge oder als Gemisch zum Einsatz gelangen.

Gegenstand der Erfindung ist schließlich auch die Verwendung der erfindungsgemäßen blockierten Polyisocyanate als Vernetzer für organische Polyhydroxylverbindungen in Polyurethan-Einkomponenten-Einbrennlacken.

Die mit der erfindungsgemäßen Mischblockierung erreichten Vorteile bestehen, wie bereits oben zum Teil angedeutet, in
- einer verbesserten Vergilbungsresistenz der Einbrennlacke,
- der Möglichkeit, die Einbrenntemperatur ohne Mitverwendung von Katalysatoren auf ca. 145°C abzusenken und
- der verbesserten Verträglichkeit der erfindungsgemäß blockierten Polyisocyanate mit den übrigen Komponenten des Einbrennlacks.

Durch die Mischblockierung wird einerseits der typische Nachteil des Triazols (Kristallisation der Triazol-blockierten Polyisocyanate) vermieden und gleichzeitig trotz der Mitverwendung hoher Mengen Butanonoxim die Tendenz zur Einbrennvergilbung auf das Triazol-Niveau reduziert.

Bei den den erfindungsgemäßen blockierten Polyisocyanaten zugrundeliegenden Polyisocyanaten handelt es sich um an sich bekannte Lackpolyisocyanate mit aliphatisch und/oder cycloaliphatisch gebundenen Isocyanatgruppen und einem Isocyanatgehalt von 7 bis 30, vorzugsweise 12 bis 25 Gew.-%. In Betracht kommen insbesondere die an sich bekannten, Biuret-, Isocyanurat- und/oder Uretdiongruppen aufweisenden Lackpolyisocyanate auf Basis von 1,6-Diisocyanatohexan (HDI), 1-Isocyanato-3,3,5-trimethyl-5-isocyanatomethyl-cyclohexan (IPDI) und/oder 4,4,'-Diisocyanato-dicyclohexylmethan. Besonders bevorzugt sind Isocyanuratgruppen aufweisende Lackpolyisocyanate auf Basis von (i) IPDI, (ii) Gemischen aus IPDI und 4,4'-Diisocyanatodicyclohexylmethan oder (iii) 1,6-Diisocyanatohexan.

Als Blockierungsmittel A) wird Butanonoxim, als Blockierungsmittel B) 1,2,4-Triazol eingesetzt. Als weitere, gegebenenfalls mitzuverwendende Blockierungsmittel kommen von den Blockierungsmitteln A) und B) verschiedene Blockierungsmittel wie z.B. sekundäre Amine wie Diisopropylamin oder Imidazol, CH-acide Verbindungen, z.B. Malonsäurediethylester oder ε-Caprolactam in Betracht.

Gemäß einer bevorzugten Ausführungsform des erfindungsgemäßen Verfahrens werden die zu blockierenden Ausgangspolyisocyanate vor, während und/oder im Anschluß an die Blockierungsreaktion mit bis zu 20, vorzugsweise 1 bis 12 Äquivalent-% (bezogen auf die Isocyanatgruppen der Ausgangspolyisocyanate einerseits und die gegenüber Isocyanatgruppen reaktionsfähigen Gruppen der Hydrazin-Addukte andererseits) an Verbindungen umgesetzt, die pro Molekül mindestens eine Struktureinheit der Formel 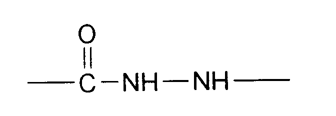 und mindestens eine, von der genannten Struktureinheit verschieden, gegenüber Isocyanatgruppen reaktionsfähige Gruppe aufweisen. Im übrigen werden die Mengenverhältnisse der Reaktionspartner bei dieser Modifiziering vorzugsweise so gewählt, daß die erfindungsgemäßen blockierten Polyisocyanate bis zu 4 Gew.-% an Struktureinheiten der letztgenannten Formel enthalten.

Für diese Modifizierungsreaktion geeignete Hydrazin-Addukte sind beispielsweise solche der Formel 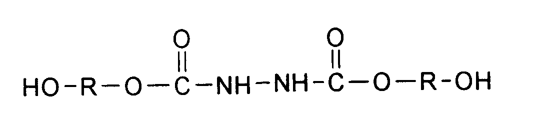 in welcher,
- R: für einen Ethylen-, Isopropylen- oder 1,3-Neopentylen-Rest
steht.

Die Hydrazin-Addukte können durch Umsetzung von 1 Mol Hydrazinhydrat mit 2 Mol eines cyclischen Carbonats, z.B. Ethylen-, Isopropylen- oder 1,3-Neopentylencarbonat, beispielsweise in siedendem Toluol erhalten werden. Das Hydratwasser wird hierbei azeotrop abdestilliert.

Andere, für die erfindungsgemäße Modifizierungsreaktion geeignete Hydrazin-Addukte sind beispielsweise die in US-PS 5 216 078 genannten Verbindungen, insbesondere das von der Firma Elf-Atochem unter der Bezeichnung ^{®}Luchem HA-R 100 vertriebene Hydrazin-Addukt der Formel

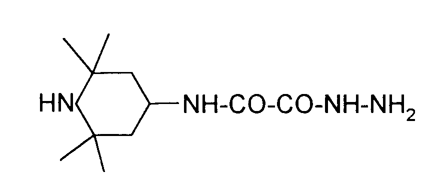

Die Blockierungsmittel A) bis C) werden bei der Durchführung des erfindungsgemäßen Verfahrens in solchen Mengen eingesetzt, daß das Äquivalentverhältnis von Isocyanatgruppen der Ausgangspolyisocyanate abzüglich der gegebenenfalls zum Einbau des Hydrazin-Adduktes benötigten NCO-Gruppen zu NCO-reaktiven Gruppen des Blockierungsmittels bei 0,95:1 bis 1,2:1, vorzugsweise 1:1 bis 1,1:1 liegt. Die Isocyanatgruppen der erfindungsgemäßen Polyisocyanate sind demzufolge zumindest zu 95 %, vorzugsweise vollständig blockiert.

Die Durchführung des erfindungsgemäßen Verfahren erfolgt im allgemeinen im Temperaturbereich von 20 bis 120, vorzugsweise 50 bis 100°C in Substanz oder in geeigneten Lösungsmitteln wie beispielsweise n-Butylacetat, Methoxypropylacetat, Toluol oder höheren aromatischen Lösungsmittelgemichen wie sie beispielsweise von der Firma Exxon-Chemie unter der Bezeichnung ^{®}Solvesso vertrieben werden.

Beispielsweise kann das erfindungsgemäße Verfahren nach folgender Verfahrensvariante durchgeführt werden: Man legt die gelöste Isocyanatkomponente vor und gibt hierzu die erste Teilmenge des Blockierungsmittels, beispielsweise die Komponente B). Die Umsetzung mit 1,2,4-Triazol wird bei 100°C in ca. 1 Stunde bis zu dem kalkulierten NCO-Gehalt durchgeführt. Anschließend kühlt man ab, z.B. auf 50°C, und setzt mit der anderen Teilmenge der reaktionsfreudigeren Komponente A) um, bis kein NCO-Gehalt IR-spektroskopisch mehr nachweisbar ist. Gegebenenfalls mit Lösungsmittel wird zum Schluß auf die gewünschte Viskosität eingestellt.

Im Falle einer zusätzlichen Modifizierung der erfindungsgemäßen blockierten Polyisocyanate durch Einbau von Hydrazin-Addukten der beispielhaft genannten Art können diese im Prinzip zu einem beliebigen Zeitpunkt vor, während und/oder im Anschluß an die Blockierungsreaktion eingebaut werden. So kann man beispielsweise bei Verwendung der obengenannten Hydroxylgruppen aufweisenden Hydrazin-Addukte diese nach Blockierung mit dem Blockierungsmittel B) und vor dem Einsatz des Blockierungsmittels A) dem Reaktionsgemisch hinzufügen. Bei Verwendung von "Luchem HA-R 100" empfiehlt sich dessen Einbau zusammen mit dem Blockierungsmittel A), beispielsweise durch Verwendung von entsprechenden Lösungen des Hydrazin-Addukts in Butanonoxim.

Die erfindungsgemäßen, überwiegend bzw. vollständig blockierten Polyisocyanate stellen wertvolle Vernetzerharze für organische Polyhydroxylverbindungen bei der Herstellung von Einbrennlacken dar. Sie können hierbei anstelle der bislang für diesen Zweck eingesetzten blockierten Polyisocyanate eingesetzt werden. Geeignete Polyhydroxylverbindungen für diesen Einsatzzweck, sowie weitere Details bezüglich der Herstellung und Anwendung derartiger Einbrennlacke können der einschlägigen Literatur entnommen werden. Besonders bevorzugtes Anwendungsgebiet für die erfindungsgemäßen Produkte ist ihre Verwendung als Vernetzer für Einbrenn-Polyurethanklarlacke, wie sie als Decklack insbesondere bei der Automobil-Mehrschichtlackierung zur Anwendung gelangen, wobei als Reaktionspartner für die erfindungsgemäßen blockierten Polyisocyanate die an sich bekannten Polyesterpolyole, Polyacrylatpolyole oder deren Gemische verwendet werden.

In den nachfolgenden Beispielen beziehen sich alle Prozentangaben, soweit nichts anderslautendes angemerkt, auf das Gewicht.

### Beispiele

In den nachfolgenden Beispielen wird folgende Polyolkomponente eingesetzt:

| | | |
|---|---|---|
| 80 OH-Äquivalent-% | Acrylat I | 290 g |
| 20 OH-Äquivalent-% | Polyester I | 90 g |
| 100 OH-Äquivalent-% | 1 Val OH-Komponente | 380 g |

Bei dem Acrylat I handelt es sich um eine 75 %ige Lösung in Xylol eines handelsüblichen Polyacrylatharzes mit einem Hydroxylgruppengehalt der Lösung von 4,7 % (Desmophen A Versuchsprodukt LS 2051 der Bayer AG, Leverkusen).

Bei dem Polyester I handelt es sich um eine 80 %ige Lösung in n-Butylacetat eines handelsüblichen, verzweigten Polyesterpolyols (Desmophen Versuchsprodukt LS 2971 der Bayer AG, Leverkusen). Der Hydroxylgruppengehalt der Lösung liegt bei 3,8 %.

### Beispiel 1 (erfindungsgemäß)

### Herstellung eines erfindungsgemäßen, mischblockierten Polyisocyanats

### Ansatz:

- 720 g (2,0 Val): eines isocyanurathaltigen Lackpolyisocyanates auf Basis von IPDI und zu 70 % gelöst in ^{®}Solvesso 100, NCO-Gehalt der Lösung 11,6 %
- 69 g (1,0 Val): 1,2,4-Triazol
- 87 g (1,0 Val): Butanonoxim
- 224 g: Methoxypropylacetat

### Durchführung:

Das obige Polyisocyanat wird zusammen mit Methoxypropylacetat vorgelegt. Zu der gerührten Lösung werden die kristallinen Flocken aus 1,2,4-Triazol gegeben. Man erwärmt auf 100°C, wobei Triazol in Lösung geht und mit einem Teil der NCO-Gruppen abreagiert. Nach ca. 1 Stunde Umsetzungsdauer bei 100°C ermittelt man einen NCO-Gehalt von 4,0 %, berechnet sind 4,15 %. Man kühlt auf ca. 50°C ab und tropft Butanonoxim in dem Maße zu (Exothermie), daß die Temperatur nicht über 70°C steigt. Nach beendeter Butanonoxim-Zugabe wird noch ca. 1 Stunde bei 70°C umgesetzt. Danach läßt sich in der Lösung kein NCO-Gehalt IR-spektroskopisch mehr nachweisen. Man erhält ein blockiertes Polyisocyanat mit einem NCO-Äquivalentgewicht der Lösung (bezogen auf die blockierten Isocyanatgruppen) von 550 g. Die Viskosität (23°C) der Lösung liegt bei 30 000 mPa.s.

### Beispiel 2 (Vergleich)

Als Vergleich dient ein handelsübliches, nur mit Butanonoxim blockiertes Polyisocyanat auf Basis des isocyanurathaltigen Lackpolyisocyanats gemäß Beispiel 1, 65 %ig gelöst in Solvesso 100. Das NCO-Äquivalentgewicht der Lösung (bezogen auf die blockierten Isocyanatgruppen) liegt bei 518. Die Lösung weist eine Viskosität (23°C) von 14 000 mPa.s auf.

### Beispiel 3 (erfindungsgemäß)

Dieses Beispiel unterscheidet sich von Beispiel 1 durch den zusätzlichen Einbau des nachstehend genannten Hydrazin-Adduktes, hergestellt aus 1 Mol Hydrazinhydrat und 2 Mol Propylencarbonat, mit der Strukturformel 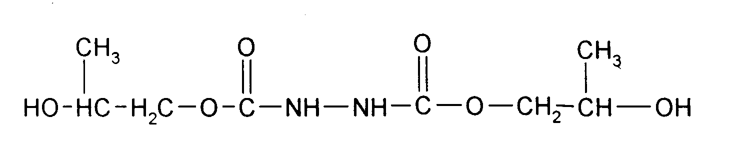 und dem Molekulargewicht 236.

### Ansatz:

- 792 g (2,2 Val): der Lösung des Isocyanuratgruppen enthaltenden Lackpolyisocyanates auf Basis von IPDI gemäß Beispiel 1
- 69 g (1,0 Val): 1,2,4-Triazol
- 87 g (1,0 Val): Butanonoxim
- 23,6 g (0,2 Val): des obigen Hydrazin-Adduktes
- 253,4 g: Methoxypropylacetat

### Durchführung:

Das obige Poloyisocyanat sowie Methoxypropylacetat werden vorgelegt. In die gerührte Lösung werden die kristallinen Flocken von 1,2,4-Triazol (Fp. 120°C) eingerührt. Die Mischung wird in Stufen auf 100°C erwärmt. Hierbei geht 1,2,4-Triazol vollständig in Lösung. Danach gibt man das geschmolzene Hydrazin-Addukt in einem Guß hinzu und setzt für 1 bis 2 Stunden bei 100°C um, bis der gemessene NCO-Gehalt auf ca. 3,8, berechnet sind 3,7, abgesunken ist. Anschließend läßt man auf 50°C abkühlen und dosiert Butanonoxim so hinzu, daß die Temperatur 70°C nicht übersteigt. Nach einer weiteren Stunde Umsetzungsdauer ist meistens IR-spektroskopisch kein NCO-Gehalt mehr feststellbar, ansonsten werden geringe Mengen an Butanonoxim nachgegeben.

Man erhält eine Klare, farblose Lösung (60 %ig) eines mischblockierten Polyisocyanates mit einem NCO-Äquivalentgewicht (bezogen auf blockierte Isocyanatgruppen) der Lösung von 612,5 g. Die Viskosität (23°C) der Lösung liegt bei 25 000 mPa.s.

### Beispiel 4 (erfindungsgemäß)

In diesem Beispiel wird ein Gemisch aus IPDI-Trimerisat und HDI-Trimerisat als Ausgangspolyisocyanat eingesetzt. Hiervon abgesehen wird in weitgehender Analogie zu Beispiel 3 gearbeitet.

### Ansatz:

- 587,0 g (1,63 Val): der Lösung des auf IPDI basierenden Polyisocyanates gemäß Beispiel 1
- 200,0 g (1,0 Val): eines handelsüblichen Isocyanuratgruppen enthaltenden Polyisocyanates auf Basis 1,6-Diisocyanatohexan, NCO-Gehalt ca. 21 %, Viskosität bei 23°C ca. 3000 mPa.s
- 79,3 g (1,15 Val): 1,2,4-Triazol
- 100,0 g (1,15 Val): Butanonoxim
- 39,0 g (0,33 Val): des Hydrazin-Propylencarbonat-Adduktes gemäß Beispiel 3
- 383,7 g: Methoxypropylacetat

### Durchführung:

Die beiden Polyisocyanate sowie Methoxypropylacetat werden vorgelegt. Unter Rühren werden zu dieser Lösung die kristallinen Flocken von 1,2,4-Triazol gegeben. Man steigert die Innentemperatur auf 100°C, wobei sich Triazol (Fp. 120°C) auflöst und setzt 1 Stunde bei 100°C um. Danach gibt man das geschmolzene Hydrazin-Addukt (vgl. Beispiel 3) in einem Guß hinzu und setzt für weitere 2 Stunden bei 100°C um, bis der NCO-Gehalt 3,8 % (berechnet sind 3,75 %) erreicht ist. Man läßt auf 50°C abkühlen und dosiert Butanonoxim so hinzu, daß die Temperatur 70°C nicht überschreitet. Man rührt noch ca. 1 Stunde bei 70°C nach, prüft IR-spektroskopisch auf das Verschwinden der NCO-Bande und füllt schließlich ab.

Man erhält eine fast farblose Lösung (60 %ig) eines mischblockierten Polyisocyanates mit einer Viskosität (23°C) von ca. 2000 mPa.s und einem NCO-Äquivalentgewicht (bezogen auf blockierte Isocyanatgruppen) der Lösung von 695 g.

### Beispiel 5

Es werden die Klarlackkombinationen aus der eingangs erläuterten Polyolkomponente mit den blockierten Vernetzern der Beispiele 1 bis 4, die Applikations- und Einbrennbedingungen sowie die Thermovergilbung beschrieben.

### 1. Klarlack-Aufbau

Die Klarlacke werden durch Mischen der blockierten Polyisocyanate der Beispiele 1 bis 4 mit der eingangs beschriebenen Polyolmischung aus Acrylat I/Polyester I im Verhältnis ihrer Äquivalentgewichte (NCO/OH = 1) unter Zugabe eines Katalysators, wie nachfolgend angegeben, hergestellt.

| Klarlackrezeptur | Polyisocyanat | Polyolmischung Acrylat I/Polyester I | Katalyse 0,1 % Dibutylzinndilaurat |
|---|---|---|---|
| A | Beispiel 1 550 g | 380 g | 0,9 g |
| B | Beispiel 2 518 g | 380 g | 0,9 g |
| C | Beispiel 3 612,5 g | 380 g | 1,0 g |
| D | Beispiel 4 695 g | 380 g | 1,0 g |

### 2. Applikation und Thermovergilbung

Die obigen Klarlacke werden auf Prüfbleche, die mit einem handelsüblichen, weißen Basislack, z.B. von der Fa. Spies & Hecker/Köln, beschichtet sind, in einer Naßschichtdicke von ca. 120 bis 150 µm appliziert.

Die Prüfbleche werden anschließend für 30 Minuten bei 140°C im Trockenschrank eingebrannt. Danach erfolgt die erste Farbmessung nach der sogenannten CIELAB-Methode. Je größer der hierbei ermittelte positive b-Wert ist, um so gelber hat sich der Klarlack verfärbt.

Hieran schließt sich der Überbrennvorgang mit 30 Minuten bei 160°C an, anschließend wird der Zuwachs der Gelbfärbung, der sogenannte Δb-Wert nach dem CIE-LAB-Farbsystem (DIN 6174) gemessen. Dieser Wert sollte für nicht vergilbende Klarlacke möglichst nahe bei 0 sein.

Die Ergebnisse der Klarlacke A bis D sind tabellarisch, wie folgt, zusammengefaßt.

| Klarlack | Thermovergilbung nach dem Einbrennvorgang (b) | Thermovergilbung nach dem Überbrennvorgang (Δb) | Schichtdicke (µm) |
|---|---|---|---|
| A | 0,6 | 1,0 | 50 |
| B | 3,0 | 1,1 | 55 |
| C | 0,5 | 0,9 | 55 |
| D | 1,2 | 0,8 | 50 |

Die obige Messung zeigt, daß der Klarlackfilm B mit einem Polyisocyanat-Vernetzer gemäß dem Stand der Technik (100 % Butanonoxim blockiert) die stärkste Vergilbung aufweist. Die Gelbwerte b + Δb nach den beiden Einbrennvorgängen addieren sich zu 4,1.

Weiterhin sieht man, daß der Klarlack C, der entsprechende Vernetzer unterscheidet sich von demjenigen des Klarlacks A nur durch den Zusatz des Hydrazin-Adduktes, am vergilbungsbeständigsten ist; seine b + Δb-Werte addieren sich nur zu 1,4.

Der Klarlack D hingegen, er enthält neben einem auf IPDI basierenden Polyisocyanat ein solches auf Basis von 1,6-Diisocyanatohexan, weist zwar mit b + Δb den relativ schlechtesten Wert der Thermovergilbung unter den Karlacken mit erfindungsgemäßer Blockierung auf. Dennoch ist hier die Thermovergilbung günstiger als bei Klarlack B gemäß Stand der Technik. Im übrigen weist Klarlack D mit Δb = 0,8 die beste Überbrennfestigkeit auf.

## Patentansprüche

1. (Cyclo)aliphatische Polyisocyanate, deren Isocyanatgruppen zu mindestens 95 % in mit Blockierungsmitteln blockierter Form vorliegen, und die einen Gehalt an unblockierten und blockierten Isocyanatgruppen (berechnet als NCO) von insgesamt 5 bis 25 Gew.-% aufweisen, dadurch gekennzeichnet, daß sich die Blockierungsmittel zu
A) 30 bis 70 Äquivalent-% aus Butanonoxim,
B) 30 bis 70 Äquivalent-% aus 1,2,4-Triazol und zu
C) 0 bis 30 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

2. Organische Polyisocyanate gemäß Anspruch 1, gekennzeichnet durch einen Gehalt von bis zu 4 Gew.-%, bezogen auf Festkörper des blockierten Polyisocyanats, an chemisch fixierten Struktureinheiten der Formel

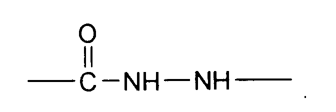

3. Verfahren zur Herstellung von blockierten Polyisocyanaten gemäß Anspruch 1 und 2, gegebenenfalls in in Lacklösungsmitteln gelöster Form durch Umsetzung einer, gegebenenfalls in Lacklösungsmitteln gelösten Polyisocyanat-Komponente, bestehend aus mindestens einem Polyisocyanat mit (cyclo)aliphatisch gebundenen Isocyanatgruppen und einem Isocyanatgehalt von 7 bis 30 Gew.-% mit Blockierungsmitteln für Isocyanatgruppen, wobei gegebenenfalls vor, während und/oder im Anschluß an die Blockierungsreaktion bis zu 20 NCO-Äquivalent-% des zu blockierenden Polyisocyanats mit Verbindungen mit mindestens einer Carbonsäurehydrazid-Gruppe und mindestens einer gegenüber Isocyanatgruppen reaktionsfähigen Gruppe im Sinne einer Isocyanat-Additionsreaktion zur Reaktion gebracht werden, so daß das resultierende, blockierte Polyisocyanat bis zu 4 Gew.-%, bezogen auf Feststoff, an chemisch fixierten Struktureinheiten der Formel 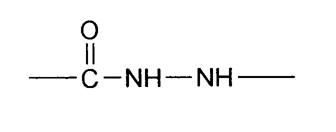 enthält,
dadurch gekennzeichnet, daß die Blockierungsmittel in einer Menge von mindestens 95 Äquivalent-%, bezogen auf die, nach der genannten, gegebenenfalls durchzuführenden Modifizierung noch vorliegenden NCO-Gruppen des zu blockierenden Polyisocyanats zum Einsatz gelangen und sich, bezogen auf die Gesamtmenge der Blockierungsmittel, zu
A) 30 bis 70 Äquivalent-% aus Butanonoxim,
B) 30 bis 70 Äquivalent-% 1,2,4-Triazol und
C) 0 bis 30 Äquivalent-% aus mindestens einem weiteren, von A) und B) verschiedenen Blockierungsmittel zusammensetzen, wobei die Blockierungsmittel in beliebiger Reihenfolge oder als Gemisch zum Einsatz gelangen.

4. Verwendung der blockierten Polyisocyanate gemäß Anspruch 1 und 2 als Vernetzer für organische Polyhydroxylverbindungen in Polyurethan-Einkomponenten-Einbrennlacken.

## Claims

1. (Cyclo)aliphatic polyisocyanates, at least 95% of the isocyanate groups of which are in a form blocked by blocking agents, and which have a content of unblocked and blocked isocyanate groups (calculated as NCO) of 5 to 25 wt.% in total, characterised in that the blocking agents consist of
A) 30 to 70 equivalent-% of butanone oxime,
B) 30 to 70 equivalent-% of 1,2,4-triazole and
C) 0 to 30 equivalent-% of other blocking agents, different from A) and B),
the above-mentioned percentages being based on all the blocking agents and amounting to 100.

2. Organic polyisocyanates according to claim 1, characterised by a content of up to 4 wt.%, based on the solid form of the blocked polyisocyanate, of chemically fixed structural units corresponding to the formula

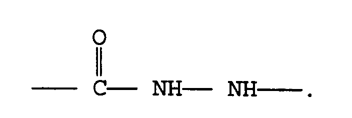

3. Process for the preparation of blocked polyisocyanates according to claims 1 and 2, optionally in a form dissolved in coating solvents, by reaction of a polyisocyanate component, optionally dissolved in coating solvents and consisting of at least one polyisocyanate having (cyclo)aliphatically bonded isocyanate groups and an isocyanate content of 7 to 30 wt.%, with blocking agents for isocyanate groups, optionally before, during and/or after the blocking reaction, up to 20 NCO-equivalent-% of the polyisocyanate to be blocked being reacted in an isocyanate addition reaction with compounds having at least one carboxylic hydrazide group and at least one group reactive to isocyanate groups, so that the resulting blocked polyisocyanate contains up to 4 wt.%, based on solid, of chemically fixed structural units corresponding to the formula 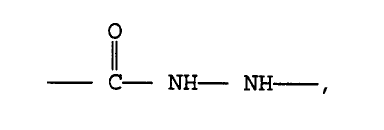 characterised in that the blocking agents are used in a quantity of at least 95 equivalent-%, based on the NCO groups still present after the above-mentioned modification optionally carried out, of the polyisocyanate to be blocked, and that they consist, based on the total quantity of the blocking agents, of
A) 30 to 70 equivalent-% of butanone oxime,
B) 30 to 70 equivalent-% of 1,2,4-triazole and
C) 0 to 30 equivalent-% of at least one other blocking agent, different from A) and B), the blocking agents being used in any order or as a mixture.

4. Use of the blocked polyisocyanates according to claims 1 and 2 as cross-linking agents for organic polyhydroxyl compounds in polyurethane one-component stoving paints.

## Revendications

1. Polyisocyanates (cyclo)aliphatiques dont les groupes isocyanates sont bloqués en proportions d'au moins 95 % et qui ont une teneur en groupes isocyanate bloqués et non bloqués (exprimée en NCO) de 5 à 25 % en poids au total, caractérisés en ce que les agents bloquants consistent
A) pour 30 à 70 équivalents% en la butanonoxime,
B) pour 30 à 70 équivalents% en le 1,2,4-triazole et
C) pour 0 à 30 équivalents en agents bloquants autres que A) et B),
les pourcentages indiqués se complétant à 100 pour le total des agents bloquants.

2. Polyisocyanates organiques selon la revendication 1, caractérisés en ce qu'ils contiennent jusqu'à 4 % en poids, par rapport aux matières solides du polyisocyanate bloqué, de motifs de structure de formule : 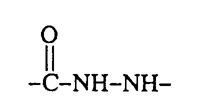 combinés chimiquement.

3. Procédé de préparation des polyisocyanates bloqués selon les revendications 1 et 2, le cas échéant à l'état de solution dans des solvants, par réaction d'un composant polyisocyanate, éventuellement à l'état de solution dans des solvants, consistant en au moins un polyisocyanate à groupes isocyanate à liaisons (cyclo)aliphatiques et à une teneur en isocyanate de 7 à 30 % en poids, avec des agents bloquants des groupes isocyanate, et le cas échéant réaction avant, durant et/ou après la réaction de blocage, d'une proportion allant jusqu'à 20 équivalents de NCO% du polyisocyanate à bloquer avec des composés contenant au moins un groupe hydrazide d'acide carboxylique et au moins un groupe réactif avec les groupes isocyanate dans le sens d'une réaction d'addition des isocyanates, en sorte que le polyisocyanate bloqué obtenu contienne jusqu'à 4 % en poids, sur les matières solides, de motifs de structure de formule: 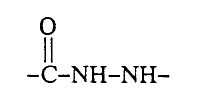 combinés chimiquement,
caractérisé en ce que les agents bloquants sont mis en oeuvre en quantité d'au moins 95 équivalents%, par rapport aux groupes NCO du polyisocyanate à bloquer encore présents après la modification éventuelle mentionnée ci-dessus et consistent, sur leur poids total,
A) pour 30 à 70 équivalents% en la butanonoxime,
B) pour 30 à 70 équivalents% en le 1,2,4-triazole et
C) pour 0 à 30 équivalents% en au moins un autre agent bloquant différent de A) et B), ces agents bloquants étant mis en oeuvre dans un ordre quelconque ou à l'état de mélange entre eux.

4. Utilisation des polyisocyanates bloqués selon les revendications 1 et 2 en tant qu'agents réticulants pour des composés organiques polyhydroxylés dans des vernis de polyuréthanne à un seul composant à cuire au four.
